# EUROPEAN PATENT APPLICATION

(11) **EP 2 720 469 A1**
(43) Date of publication of application: **16.04.2014**
(21) Application number: 13187788.8
(22) Date of filing: 08.10.2013
(51) Int. Cl.: H04N 21/41, H04N 21/44, H04H 60/37, H04H 60/48, H04H 60/59, H04N 5/14

(54) **Display apparatus and method thereof for detecting a channel change event**

(30) Priority: 10.10.2012 US 201213648481; 11.09.2013 KR 20130109098
(71) Applicant: Samsung Electronics Co., Ltd, Gyeonggi-do 443-742 (KR)
(72) Inventor: Makaranz, Dan, 7030000 Beer Yaakov (IL); Park, Tae-suh, Yongin (KR); Shaked, Yaniv, Binyamina (IL); Arshavski, Yuri, 42200 Netanya (IL)
(74) Representative: Clark, David James

(57) **Abstract**

A display apparatus and a method for detecting a channel change event thereof are provided. The method for detecting a channel change event includes detecting at least one of a plurality of channel change features, by nalysing image frames displayed on the display apparatus, and determining a channel change event using the at least one channel change feature as detected.

## Description

### BACKGROUND

### 1. Field of the Invention

Display apparatuses and methods consistent with what is disclosed herein relate to detecting a channel change event, and more particularly, to a display apparatus configured to detect an event that a currently-viewed channel is changed, and a detecting method thereof.

### 2. Description of the Related Art

There is a growing need for TV content providers to improve both the content and the advertisements served to television viewers. In order to improve, however, it is necessary to understand the viewer's preference, and particularly what the viewer wishes to see and when he wishes to see it. Then effective advertisements and other content can be served at a time when the viewer is the most receptive for it. A useful tool for this purpose is the detection of TV channel change, which allows measuring an audience viewing habits.

The most commonly attempted solution in the art uses the set-top box (STB) digital and analog information to detect channel tune events and channel attributes. Examples of such prior art methods include using the Direct Channel Change Table (DCCT) (US 2007/004120, the Program Association Table (PAT), the Program Map Table (PMT) or the Conditional Access Table (CAT) (US 7,086,076). WO 2005/057322 relates to On Screen Channel Change Detection (OSCCD) and detects and analyses a digit images in the frame sequences.

In spite of many attempts found in the art to address the issue of channel change detection, the art has so far failed to provide a simple and effective method, which is not dependent on external factors. Some of the known solutions make use of the internal STB digital information that is not always available. Others detect digits on the screen or the channel logo, which is relevant only to a small part of channel tune event cases, since the channel number is not always present on the screen, and furthermore the channel logo does not appear constantly and may disappear (for example during advertisements). The prior art solutions become even less feasible for transparent or animated channel numbers or logos.

### SUMMARY

Exemplary embodiments of the present inventive concept overcome the above disadvantages and other disadvantages not described above. Also, the present inventive concept is not required to overcome the disadvantages described above, and an exemplary embodiment of the present inventive concept may not overcome any of the problems described above.

According to one embodiment, a technical objective is to provide a display apparatus configured to detect lively a channel change, irrespective of TV source and irrespective of channel feature such as channel number or logo.

According to an embodiment for achievement of the purpose, a method of a display apparatus for detecting a channel change is provided, which may include detecting at least one of a plurality of channel change features, by analyzing image frames displayed on the display apparatus, and determining a channel change event using the at least one channel change feature as detected.

The plurality of channel change features may include at least one of: detection of a null frame; detection of a scene change; appearance of Electronic Program Guide On Screen Display (EPG OSD); and changed constant regions.

The scene change may be detected, when an image parameter of a first frame is different from an image parameter of a next frame following the first frame.

The constant regions may include a channel number or a channel logo of the image frames.

The determining may include determining that the channel change event is occurred, when a first frame is a null frame, and there is a scene change generated between the first frame and a next frame following the first frame so that the next frame is not a null frame.

The determining may include determining that the channel change event is occurred, when detecting the EPG OSD in the first frame, and detecting a scene change generated between the first frame and a next frame following the first frame and detecting the EPG OSD in the next frame.

The determining may include determining that the channel change event is occurred, when the EPG OSD detected in the first frame and the EPG OSD detected in the next frame are at a same location.

The determining may include increasing a possibility of the channel change event, when the plurality of channel change features are generated.

The method may include cropping a black margins from the image frames displayed on the display apparatus.

In one embodiment, a display apparatus is provided, which may include an inputter configured to receive inputted image frames, a frame analyzer configured to detect at least one of a plurality of channel change features, by analyzing image frames displayed on the display apparatus, and determining a channel change event using at least one of the channel change features as detected.

The plurality of channel change features may include at least one of: detection of a null frame; detection of a scene change; appearance of Electronic Program Guide On Screen Display (EPG OSD); and changed constant regions.

The display apparatus may additionally include a scene change detector configured to detect the scene change, when an image parameter of a first frame is different from an image parameter of a next frame following the first frame.

The constant regions may include a channel number or a channel logo of the image frames.

The display apparatus may additionally include a null frame detector configured to detect a null frame. The determiner may determine that the channel change event is occurred, when detecting, via the null frame detector, that a first frame is a null frame, and detecting that there is a scene change generated between the first frame and a next frame following the first frame so that the next frame is not a null frame.

The display apparatus may additionally include an OSD detector configured to detect the EPG OSD. The determiner may determine that the channel change event is occurred, when detecting, via the OSD detector, the EPG OSD in the first frame, and detecting a scene change generated between the first frame and a next frame following the first frame and detecting the EPG OSD in the next frame.

The determiner may increase a possibility of the channel change event, when the plurality of channel change features are generated.

The display apparatus may include a margins crop configured to crop a black margins from the image frames displayed on the display apparatus.

According to the present invention there is provided an apparatus and method as set forth in the appended claims. Other features of the invention will be apparent from the dependent claims, and the description which follows.

### BRIEF DESCRIPTION OF THE DRAWINGS

The above and/or other aspects of the present inventive concept will be more apparent by describing certain exemplary embodiments of the present inventive concept with reference to the accompanying drawings, in which:
FIG. 1 is a block diagram of a constitution to operate according to an embodiment;
FIG. 2 illustrates a decision module according to an embodiment;
FIGS. 3A to 3D illustrate a channel change event according to an embodiment;
FIG. 4 is a view provided to explain an event that a viewer does not make a channel change decision while viewing TV show, according to an embodiment;
FIG. 5 is a block diagram of an apparatus according to an embodiment; and
FIG. 6 is a flowchart provided to explain a method for detecting a channel change event of a display apparatus, according to an embodiment.

### DETAILED DESCRIPTION OF EXEMPLARY EMBODIMENTS

Certain exemplary embodiments of the present inventive concept will now be described in greater detail with reference to the accompanying drawings.

In the following description, same drawing reference numerals are used for the same elements even in different drawings. The matters defined in the description, such as detailed construction and elements, are provided to assist in a comprehensive understanding of the present inventive concept. Accordingly, it is apparent that the exemplary embodiments of the present inventive concept can be carried out without those specifically defined matters. Also, well-known functions or constructions are not described in detail since they would obscure the invention with unnecessary detail.

Meanwhile, a source of TV signal that arrives at a TV set may include a settop box (digital or analogue), a streamer, a hotel cable network or a computer. Accordingly, for efficient system as that explained below, detecting a channel change event may be performed independently from the TV source. In one embodiment, the TV may itself detect an event that indicates a channel change. The TV set may operate under a variety of specification including, for example, Phase Alternating Line (PAL)/National Television Standards Committee (/NTCS)/ Systeme Electronique pour Couleur avec Memoire (SECAM) specification, specification such as high definition television (HDTV) that was developed by the Advanced Television System Committee (ATSC), or Digital Video Broadcasting (DVB) project, and may be a multimedia computer system. Of course, various other specifications that are available for application in TV set may also be applied.

In one embodiment, detecting a channel change may be performed using a combination of one or more channel change features that indicate typical channel change event. Because a channel change event lasts approximately 1 second or less, in one embodiment, at least one video frame is used to detect a channel change event. A list of channel change feature may include one or more of the following.

Null frame: Most settop boxes generate a black frame for the duration of channel change, and this black frame is generally referred to as 'null frame'. In one embodiment, a null frame detector is provided to detect the null frame.

Scene change: In most of channel change events, the viewed scenes change. Accordingly, the previous channel content parameters and the new channel content parameters (e.g., SNR, white balance, color, etc.) are different. In one embodiment, a scene change detector is provided to confirm such changes.

Electronic Program Guide On-Screen Display (EPG OSD): The EPG OSD shows channel change event, and it is a specific settop box computer graphic interface that provides current/new channel information. In one embodiment, an OSD detector is provided to detect appearance of EPG. In another embodiment, an OSD topology analyzer may be provided, considering that the OSD topology varies depending on content providers.

Constant regions: In one embodiment, a constant region detector is provided to detect constant regions included in the scene appearing on TV. Change of constant regions can be a hint to a channel change. For example, the constant regions may be channel logos. While constant channel logo indicates that no channel change event has occurred, changed channel logo can indicate that channel has changed.

Decision module: In one embodiment, various modules are provided to utilize the above one or more channel change features that are appearing on screen, to detect a channel change event.

In one embodiment, the modules may include:
■ Preprocess module
■ Margins Crop: crops black margins ("Pillar") from the image
■ Frame Analysis module
■ Null frame detector
■ Scene change detector
■ OSD detector
■ OSD topology analyzer - calculates OSD location in frame.
■ Decision module
■ Performs decision using frame analysis data to provide a channel change detection result, by applying logic to detected features.

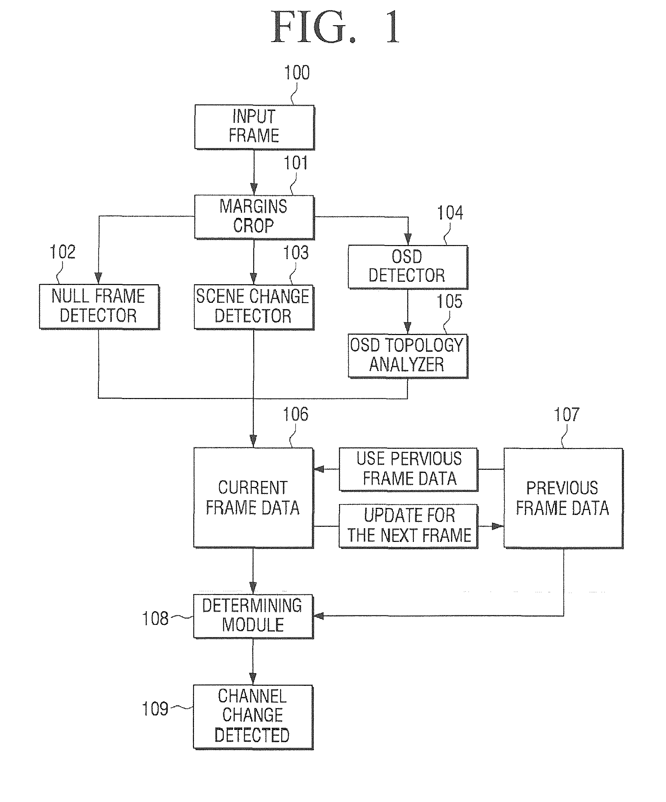

FIG. 1 is a block diagram of a constitution for operating according to an embodiment. An input frame 100 acquired from the TV set is inputted to one or more detectors 102, 103, 104 as the ones illustrated in FIG. 1.

When the content is smaller than a screen size, the margins crop 101 removes black margins by cropping the margins of the frames. The cropped frames are outputted to the null frame detector 102, the scene change detector 103 and the OSD detector 104 explained above. The cropped frames may be outputted from the OSD detector 104 to the OSD topology analyzer 105. A data set, including the current frame data 105 and the previous frame data 107, which is outputted by the analysis explained above, is outputted to the decision module 108. The current frame data 106 and the previous frame data 107 are used for the determination of channel change, and the current data is stored as the previous data for the following frame. The decision module uses channel change feature of the current and previous frames, in order to decide whether or not a channel is changed. The final result is a channel change result 109 indicated by the decision module 108 as to whether or not the generated channel change is made.

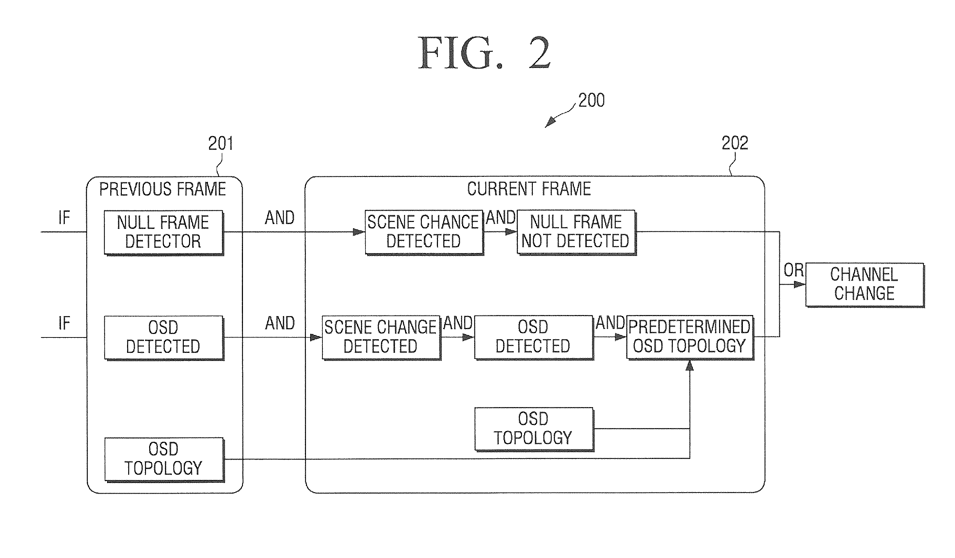

FIG. 2 is a view provided to explain a process at the decision module according to an embodiment.

Referring to FIG. 2, the decision module determines whether or not a null frame is detected in the previous frame 201. When detecting a null frame, the decision module determines if a scene change is detected in the current frame 202 so that a null frame is not detected. When the scene is changed so that the null frame is not detected in the current frame 202, the decision module may decide that a channel change event is occurred.

Referring to FIG. 2, the decision module may determine whether or not the OSD is detected in the previous frame 201. When detecting OSD, the decision module may determine if a scene change is occurred between the previous frame 201 and the current frame 202. If determining that the scene change is occurred, the decision module determines whether or not OSD is detected in the current frame 202. If determining that OSD is detected in the current frame 202, the decision module determines if the OSD topology (i.e., OSD location) of the previous frame 201 matches the topology of the current frame 202, and if so, the decision module may determine that a channel change event is occurred.

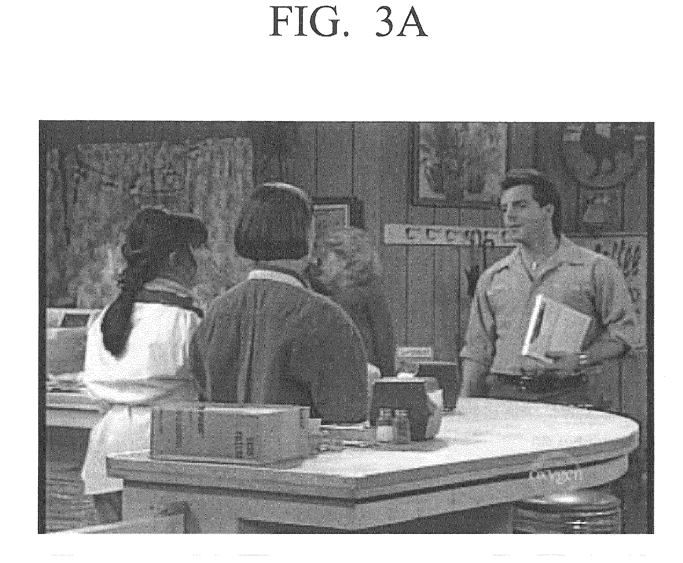

Hereinbelow, a channel change event according to various embodiments will be explained with reference to FIGS. 3A to 4.

### Example 1

### Channel change event

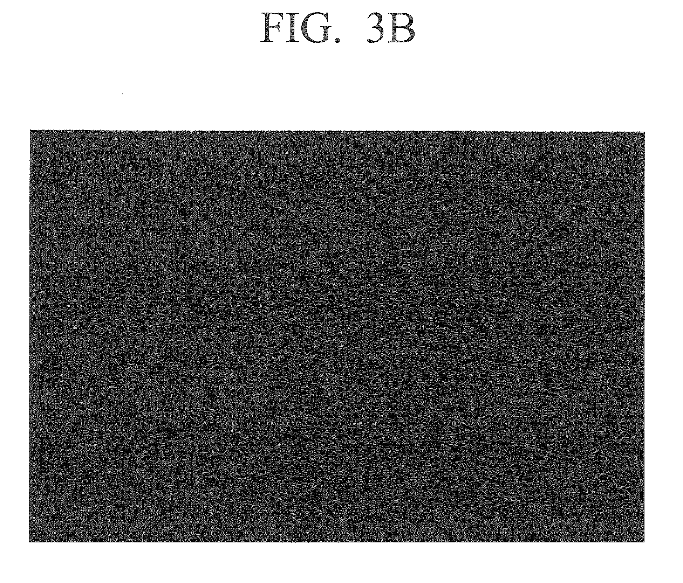

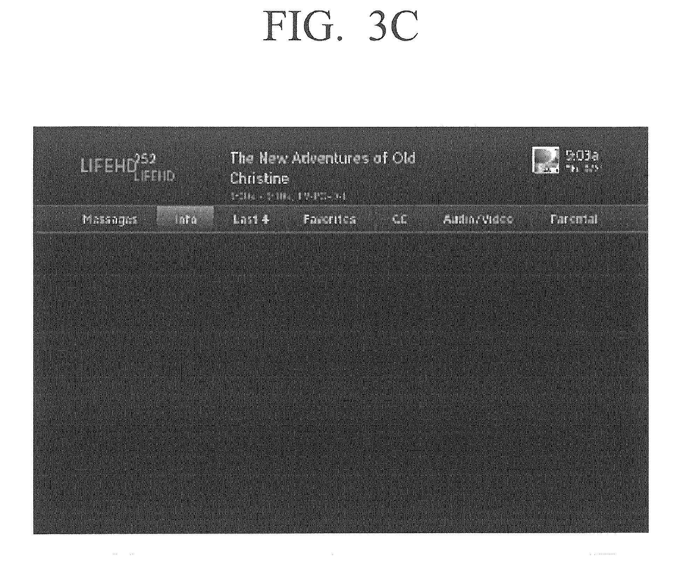

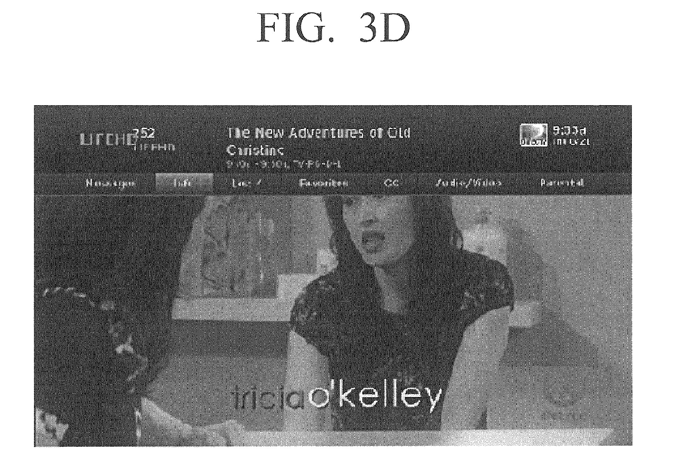

FIG. 3 illustrates changes in a frame for the duration of channel change, according to an embodiment.
Frame 1 (see FIG. 3A): the frame of temporary channel viewed by a viewer.
Frame 2 (see FIG. 3B): Viewer changes a channel using a remote control and null frame appears. The null frame may appear for the duration of at least one frame, or may not appear at all.
Frame 3 (see FIG. 3C): OSD EPG appears. OSD EPG appears for the duration of at least one frame according to settop box.
Frame 4 (see FIG. 3D): new channel appears. Channel is changed, which is the channel change event.

### Example 2

### Constant regions

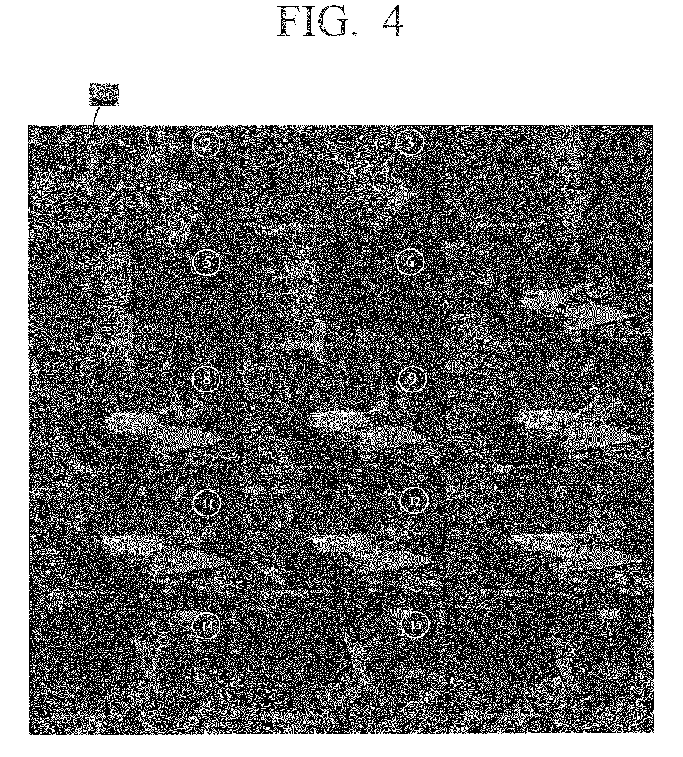

The frame sequence as the one illustrated in FIG. 4 is part of movie sequence captured from the settop box. The channel logo (TNT) appears on the left, lower region during the entire sequence. From the fact that the channel logo is displayed on the constant regions, despite the W scene change of frame 1->2, frame 5->6, frame 12->13, it is confirmed that the channel change is not occurred.

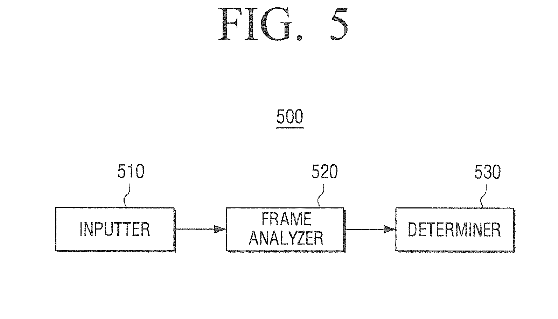

A display apparatus according to an embodiment will be explained below with reference to FIG. 5. Referring to FIG. 5, the display apparatus 500 includes an inputter 510, a frame analyzer 520 and a determiner 530.

The inputter 510 receives image frames incoming from outside. The inputter 510 may particularly receive, in real-time, image frames of broadcast content from an external broadcast station.

The frame analyzer 520 detects at least one of a plurality of channel change features, by analyzing the inputted image frames. First, the frame analyzer 520 may crop the black margins included in the inputted image frames. The frame analyzer 520 may detect the channel change detection features from the cropped image frames such as, for example, null frame detection, scene change detection, appearance of Electronic Program Guide On Screen Display (EPG OSD), or changed constant regions. The frame analyzer 520 may detect whether or not the inputted image is a null frame, may detect a scene change based on different image parameters between the first frame and the frame next to the first frame, may detect EPG OSD of the display screen, and may detect whether or not channel number or logo displayed on the constant regions is changed.

The determiner 530 determines whether or not a channel change event is generated, using at least one channel change feature detected via the frame analyzer 520.

To be specific, when detecting that the first frame is a null frame, and then detecting a scene change generated between the first frame and the next frame following the first frame, and thus detecting that the next frame is not a null frame, the determiner 530 may determine that a channel change event is occurred.

Further, when detecting EPG OSD in the first frame, and then detecting a scene change between the first frame and the next frame following the first frame and detecting EPG OSD in the next frame, the determiner 530 may determine that a channel change event is occurred. When the EPG OSD detected in the first frame and the EPG OSD detected in the next frame are at the same location, the determiner 530 may determine that a channel change event is occurred.

Further, when a plurality of channel change features are generated, the determiner 530 may increase the possibility of channel change event.

Further, even if the null frame, OSD and scene change are detected, the determiner 530 may determine that a channel change event is not occurred, when failing to detect a change in the constant regions, that is, when determining that the channel logo displayed on the constant regions is maintained constantly.

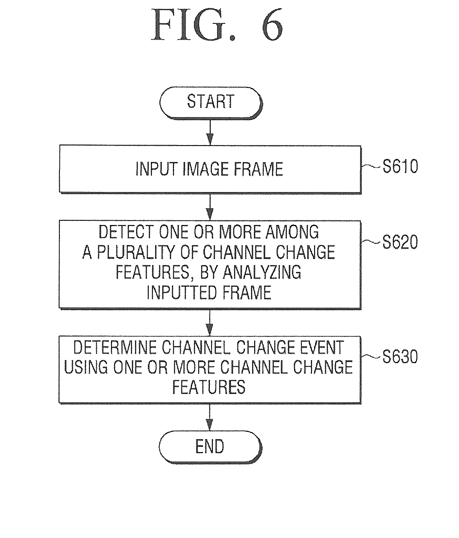

FIG. 6 is a flowchart provided to explain a method of a display apparatus for detecting channel change event, according to an embodiment.

First, at S61 0, the display apparatus 500 receives image frames.

At S620, the display apparatus 500 may detect at least one of a plurality of channel change features by analyzing the inputted image frames. The plurality of channel change features may include at least one of: detection of null frame; detection of EPG OSD and detection of changed constant regions.

At S630, the display apparatus 500 determines channel change event, using at least one channel change features. To be specific, when detecting that the first frame is a null frame, and detecting that there is a scene change generated between the first frame and the next frame following the first frame so that the next frame is not a null frame, the display apparatus 500 may determine that a channel change event is occurred. Further, when detecting EPG OSD in the first frame, and detecting that there is a scene change generated between the first frame and the next frame following the first frame and detecting EPG OSD in the next frame, the display apparatus 500 may determine that a channel change event is occurred.

In various embodiments, it is possible to detect a channel change event with respect to all the TV video stream environments.

The foregoing exemplary embodiments and advantages are merely exemplary and are not to be construed as limiting the present invention. The present teaching can be readily applied to other types of apparatuses. Also, the description of the exemplary embodiments of the present inventive concept is intended to be illustrative, and not to limit the scope of the claims.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A method of a display apparatus for detecting a channel change, the method comprising:
detecting at least one of a plurality of channel change features, by analyzing image frames displayed on the display apparatus; and
determining a channel change event using the at least one channel change feature as detected.

2. The method of claim 1, wherein the plurality of channel change features comprise at least one of: detection of a null frame; detection of a scene change; appearance of Electronic Program Guide On Screen Display (EPG OSD); and changed constant regions.

3. The method of claim 2, wherein the scene change is detected, when an image parameter of a first frame is different from an image parameter of a next frame following the first frame.

4. The method of claim 2, wherein the constant regions comprise a channel number or a channel logo of the image frames.

5. The method of claim 2, wherein the determining comprises determining that the channel change event is occurred, when a first frame is a null frame, and there is a scene change generated between the first frame and a next frame following the first frame so that the next frame is not a null frame.

6. The method of claim 2, wherein the determining comprises determining that the channel change event is occurred, when detecting the EPG OSD in a first frame, and detecting a scene change generated between the first frame and a next frame following the first frame and detecting the EPG OSD in the next frame.

7. The method of claim 6, wherein the determining comprises determining that the channel change event is occurred, when the EPG OSD detected in the first frame and the EPG OSD detected in the next frame are at a same location.

8. The method of claim 1, wherein the determining comprises increasing a possibility of the channel change event, when the plurality of channel change features are generated.

9. The method of claim 1, comprising cropping a black margins from the image frames displayed on the display apparatus.

10. A display apparatus, comprising:
an inputter configured to receive inputted image frames;
a frame analyzer configured to detect at least one of a plurality of channel change features, by analyzing image frames displayed on the display apparatus; and
determining a channel change event using at least one of the channel change features as detected.

11. The display apparatus of claim 10, wherein the plurality of channel change features comprise at least one of: detection of a null frame; detection of a scene change; appearance of Electronic Program Guide On Screen Display (EPG OSD); and changed constant regions.

12. The display apparatus of claim 11, further comprising a scene change detector configured to detect the scene change, when an image parameter of a first frame is different from an image parameter of a next frame following the first frame.

13. The display apparatus of claim 11, wherein the constant regions comprise a channel number or a channel logo of the image frames.

14. The display apparatus of claim 11, further comprising a null frame detector configured to detect a null frame, wherein
the determiner determines that the channel change event is occurred, when detecting, via the null frame detector, that a first frame is a null frame, and detecting that there is a scene change generated between the first frame and a next frame following the first frame so that the next frame is not a null frame.

15. The display apparatus of claim 11, further comprising an OSD detector configured to detect the EPG OSD, wherein
the determiner determines that the channel change event is occurred, when detecting, via the OSD detector, the EPG OSD in a first frame, and detecting a scene change generated between the first frame and a next frame following the first frame and detecting the EPG OSD in the next frame.
